# EUROPEAN PATENT SPECIFICATION

(11) **EP 4 457 428 B1**
(45) Date of publication and mention of the grant of the patent: **06.05.2026**
(21) Application number: 22847075.3
(22) Date of filing: 08.12.2022
(51) Int. Cl.: E21C 27/02, E21C 35/06

(54) **LONGWALL SHEARER POSITIONING METHOD, PAN FOR PANLINE, LONGWALL SHEARER SYSTEM**
VERFAHREN ZUR POSITIONIERUNG EINES LANGWANDSCHERERS, PFANNE FÜR EIN PANLINE-LANGWANDSCHERSYSTEM
PROCÉDÉ DE POSITIONNEMENT DE HAVEUSE POUR LONGUE TAILLE, BROYEUR POUR LIGNE DE BATÉE, SYSTÈME DE HAVEUSE POUR LONGUE TAILLE

(30) Priority: 27.12.2021 GB 202119046
(43) Date of publication of application: 06.11.2024
(73) Proprietor: Caterpillar Inc., Peoria, IL 61629-6450 (US)
(72) Inventor: TEINER, Martin, Peoria, IL 61629-6450 (US); BILSING, Rene, Peoria, IL 61629-6450 (US)
(74) Representative: Novagraaf Group
(86) International application number: PCT/US2022/081133
(87) International publication number: WO 2023/129796

(56) References cited:
- EP-B1- 1 276 969
- US-A1- 2012 091 782
- US-B2- 9 810 066
- WANG SHIJIA ET AL: "Improving the Shearer Positioning Accuracy Using the Shearer Motion Constraints in Longwall Panels", IEEE ACCESS, IEEE, USA, vol. 8, 12 March 2020 (2020-03-12), pages 52466 - 52474, XP011779536, DOI: 10.1109/ACCESS.2020.2980677
- ZHENG JIANGTAO ET AL: "A LiDAR-Aided Inertial Positioning Approach for a Longwall Shearer in Underground Coal Mining", MATHEMATICAL PROBLEMS IN ENGINEERING, vol. 2021, 25 February 2021 (2021-02-25), CH, pages 1 - 15, XP093031883, ISSN: 1024-123X, DOI: 10.1155/2021/6616090

## Description

### Technical Field

The present invention pertains to a method for determining a 3D position of a longwall shearer traveling on a panline along a longwall face of an underground coal mining panel. The present invention also pertains to a pan for a panline for use in such method. Further, the present invention also pertains to a longwall shearer system for use with such method, comprising a longwall shearer, at least one such pan, and one or more hydraulic roof support.

### Technological Background

To extract material along a longwall face in an underground mine, longwall shearers with typically two cutting drums may be provided. As is known per se, the longwall shearer reciprocates on a panline along the longwall face to extract coal material with the two rotating cutting drums. Extracted coal material is dropped onto a face conveyor running aside the longwall face between face and shearer to transport the extracted coal material away for further processing.

Hydraulic roof supports prevent roof material from collapsing on the longwall shearer including the panline and are further used to push the panline in a face advance, or coal retreat, direction. This usually happens right after the shearer passed a given pan segment of a pan line, giving a snake-like movement of the longwall shearer in the face advance direction. Behind the hydraulic roof support, the mined coal panel collapses.

Identifying shearer position and orientation during operation is crucial for controlling, monitoring and post-processing the mining progress, especially when the aim is to obtain a so-called digital twin of the shearer during operation. However, position measurement possibilities underground and during operation of the longwall shearer are limited. Reasons are physical limitations due to dust, fog, vibrations, darkness, mountain pressure induced coal seam movements, but also statutory limitations, for example the prohibition of lasers during operation.

Current positioning systems oftentimes use Inertial Navigation Systems, INS, also called Inertial Measurement Systems, IMS, for identifying a shearer orientation relative to an absolute coordinate system in the form of angles. Further, encoders or odometers are used for identifying an absolute shearer coordinate, giving one distance of the shearer relative to a fixed location in the coal seam. The INS usually comprises gyroscopes or other accelerationbased sensors. The INS outputs and the encoder outputs are then integrated and combined to a current shearer position.

Due to the slow movements of the shearer and high vibrations, acceleration data for positioning are vastly inaccurate. The yaw angle, which is usually not represented in INS based orientation detection, suffers from substantial drift when determined using positioning technologies known from the state of the art. As a result, the obtained shearer positions, or shearer trajectories, are inaccurate.

The method for determining a 3D position of a longwall shearer traveling on a panline along a longwall face of an underground coal mining panel, the pan for a panline, and the longwall shearer system solve one or more problems set forth above.

From EP 1 276 969 B1 a mining machine is known, wherein coordinate positions of a rail means are measured and used to move the rail means to assume a desired profile.

### Summary Of The Invention

Starting from the prior art, it is an objective of the present disclosure to provide a simple, reliable, cost-effective 3D positioning of a longwall shearer moving along a panline in an underground mining panel.

This objective is solved by means of a method for determining a 3D position of a longwall shearer traveling on a panline along a longwall face of an underground coal mining panel with the features of claim 1, and a longwall shearer with the features of claim 2 Preferred embodiments are set forth in the present specification, the Figures as well as the dependent claims.

Accordingly, a computer-implemented method for determining a 3D position of a longwall shearer traveling on a panline along a longwall face of an underground coal mining panel is provided, comprising the steps of retrieving sensor data indicative of an absolute shearer coordinate and a shearer orientation using a sensor device, retrieving additional sensor data indicative of the relative shearer coordinate using a sensor device, and calculating and rendering, using a computer, the 3D position and orientation of the longwall sheerer based on the absolute coordinate, the shearer orientation, and the relative shearer coordinate, wherein the calculation comprises outputting the 3D position and orientation of the longwall shearer with a panline. According to the invention, the absolute shearer coordinate comprises multiple encoder positions, and wherein the additional sensor data indicative of a relative coordinate comprises a retreat cylinder deflection in a face advance direction.

Further, a pan for a panline is provided, configured to be carried out with the method.

In addition, a longwall shearer system is provided, comprising a longwall shearer, at least one such pan, one or more hydraulic roof supports, the longwall shearer being configured for use in the method according to the present disclosure, wherein the longwall shearer comprises a sensor device, configured to retrieve sensor data indicative of an absolute shearer coordinate and a shearer orientation, and configured to retrieve additional sensor data indicative of a relative shearer coordinate.

### Brief Description Of The Drawings

The present disclosure will be more readily appreciated by reference to the following detailed description when being considered in connection with the accompanying drawings in which:
Figure 1 schematically illustrates a computer rendering of a longwall mining sheerer in combination with a panline in a perspective view;
Figure 2 schematically illustrates the axes of rotation of a longwall mining sheerer alone in a perspective view;
Figure 3 shows a longwall mining shearer system during operation in a coal panel of a coal seam;
Figure 4 shows a method for determining a 3D position of a longwall shearer according to an embodiment;
Figure 5 shows a method for determining a 3D position of a longwall shearer according to another development of the embodiment of Figure 4;
Figure 6 shows the principles of the method of Figure 5;
Figure 7 shows a method for determining a 3D position of a longwall shearer according to another development of the embodiment of Figure 4;
Figure 8 shows the principles of the method of Figure 7;
Figure 9 shows a method for determining a 3D position of a longwall shearer according to another embodiment;
Figure 10 shows forces acting on a pan for a panline;
Figure 11 shows a predicted panline predicted by the prediction step;
Figure 12 shows the principles of panline estimation; and
Figure 13 shows a diagram of a method for determining a 3D position of a longwall shearer according to a further embodiment.

### Detailed Description Of Preferred Embodiments

In the following, the invention will be explained in more detail with reference to the accompanying figures. In the Figures, like elements are denoted by identical reference numerals and repeated description thereof may be omitted in order to avoid redundancies.

In the following disclosure, the present invention is explained exemplary based on two embodiments, which may be used separately or in combination with each other. The first embodiment utilizes to the so-called "shearer trajectory" approach, whereas the second embodiment utilizes the so-called "panline" approach, as it will be explained in more detail below. The shearer trajectory approach relies on digitally stored shearer profiles, which represent, in their broadest definition, data representing an individual slice of a longwall face cut out by the shearer. The panline approach relies on the hardware of the shearer and is based on the panline geometry and relative displacements of individual pans of the panline relative to one other. In both embodiments, the underlying principle is the same, namely combining absolute and relative coordinate measurements to one value representing the 3D shearer position.

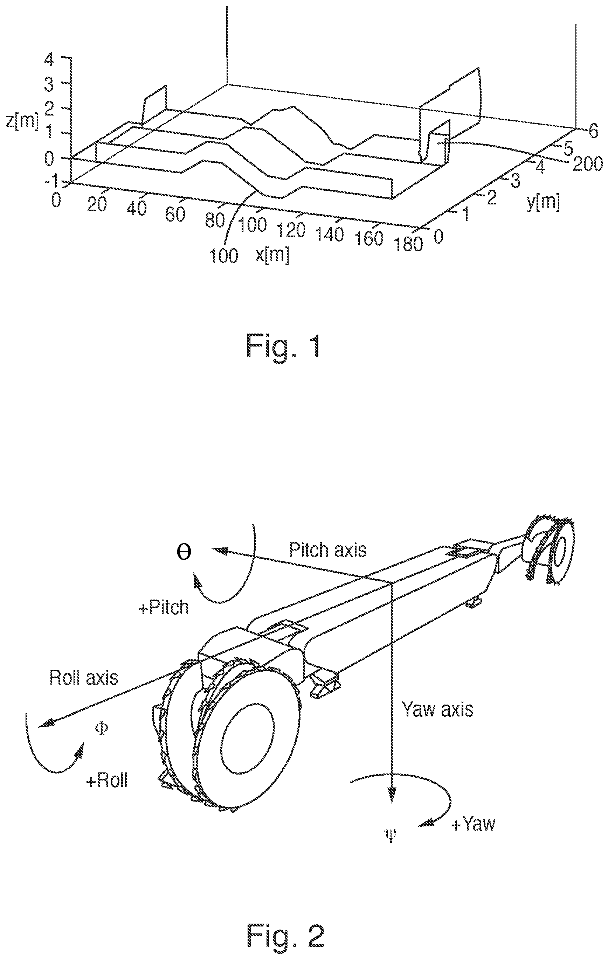

In Figure 1, a computer rendering of a longwall mining sheerer in combination with a panline is shown in a perspective view. The longwall shearer 100 is configured to travel on a panline 200 along a longwall face of an underground mining panel (not shown in Figure 1). The longwall shearer 100 reciprocates back and forth on the panline 200. Each movement occurs primarily in the x-direction according to the shown coordinate system. During each movement, from left to right, or from right to left, a slice of the longwall face is cut out of the coal mining panel. Each cut out slice may be stored by a profile, which may comprise data representing the slice. Behind the trailing end of the shearer 100, the panline 200 is moved forward incrementally into the face advance direction, also called coal retreat direction, which is represented by the y-coordinate. Thereby, the longwall shearer advances through the coal seam following a snake-like, or zigzag pattern.

To determine the 3D position of the shearer within the coal seam, current systems are based on Inertial Navigation Systems INS and an encoder or odometer. The INS provides angular displacements of the shearer relative to an absolute coordinate system. The encoder or odometer provides an absolute shearer coordinate based on a fixed reference point within the coal seam. As an example, at the end of a slice, a gate end may be provided, serving as fixed location in the coal seam for an encoder or odometer. Reaching the gate end, the shearer 100 may receive encoder data indicative of an absolute coordinate x of the shearer 100.

The underlying principle is to add a detected angular orientation change, for example in yaw, roll, and pitch angles, to a known absolute coordinate, thereby identifying the current position of the shearer in the coal seam. In general, travelled encoder distances are integrated with respect to the shearer orientation.

However, due to the slow movements of the shearer and high vibrations, the acceleration data of the Inertial Navigation System cannot be used for positioning. In particular, the yaw angle suffers from data drift, leading to inaccurate shearer trajectories.

Figure 2 shows a longwall shearer 100 alone and illustrates the axes of rotation of the longwall sheerer 100 in a perspective view. The yaw axis, the z-axis of Figure 1, representing the axis of rotation of the yaw angle Ψ. The roll axis, the x-axis of Figure 1, representing the axis of rotation of the roll angle Φ. The pitch axis, the y-axis of Figure 1, representing the axis of rotation of the pitch angle Θ.

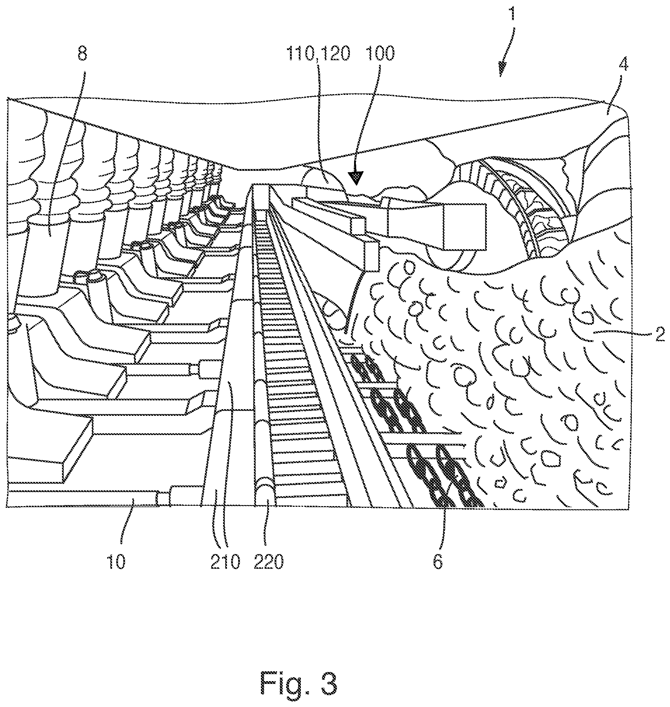

Figure 3 shows a complete longwall mining shearer system during operation in a coal panel. A longwall shearer 100 is shown, traveling on a panline 200 along a longwall face 2 of an underground coal mining panel 4. The longwall shearer 100 cuts coal off the longwall face 2 and the cut coal falls on a conveyor belt 6. On the side of the longwall shearer 100 opposing the longwall face 2, hydraulic roof supports 8 are provided, comprising hydraulic cylinders 10 configured to push an individual pan 210 of the panline 200 in the face advance direction after the longwall shearer 100 has passed the individual pan 210.

The longwall shearer 100 may comprise several sensors. The longwall shearer 100 may comprise an Inertial Navigation System 110, providing a shearer orientation. For example, the Inertial Navigation System 110 may comprise a gyroscope. The longwall shearer 100 may comprise an encoder 120, providing an absolute shearer coordinate x. The panline 200 may comprise a panline measurement unit 220 as sensor device configured to measure gravity, relay bar forces, and/or pan collision forces. The hydraulic cylinders 10 may comprise a sensor device configured to provide additional sensor data indicative of a relative shearer coordinate *̅y̅*̅ in the face advance direction y.

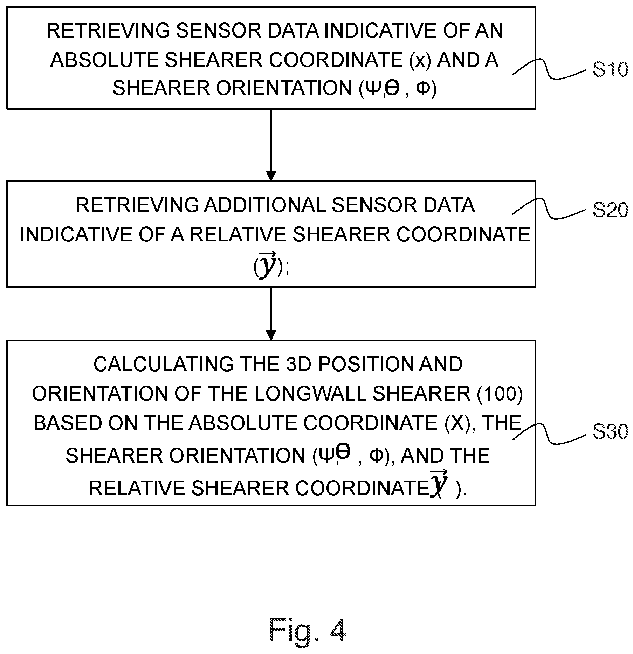

Figure 4 illustrates a flow chart of a method according to a first embodiment of the present disclosure. The method is configured for determining a 3D position of a longwall shearer 100 travelling on a panline 200 along a longwall face 2 of an underground coal mining panel 4, the method comprising the steps of retrieving S10 sensor data indicative of an absolute shearer coordinate x and a shearer orientation ψ, Θ, Φ, retrieving S20 additional sensor data indicative of a relative shearer coordinate y̅, and calculating S30 the 3D position and orientation of the longwall shearer 100 based on the absolute coordinate x, the shearer orientation ψ, Θ, Φ, and the relative shearer coordinate *̅y̅*̅. By including the additional sensor data indicative of a relative shearer coordinate, the algorithm can be improved to avoid the drift effect in the trajectory.

The absolute shearer coordinate x may for example comprise a value representing the shearer position 100 in x-direction from a fixed location in the coal seam. The shearer coordinate x comprises multiple encoder position s k-1, k, k+1, wherein the additional sensor data indicative of a relative coordinate *̅y̅*̅ comprises a retreat cylinder deflection *̅y̅*̅ᵢ in the face advance direction y.

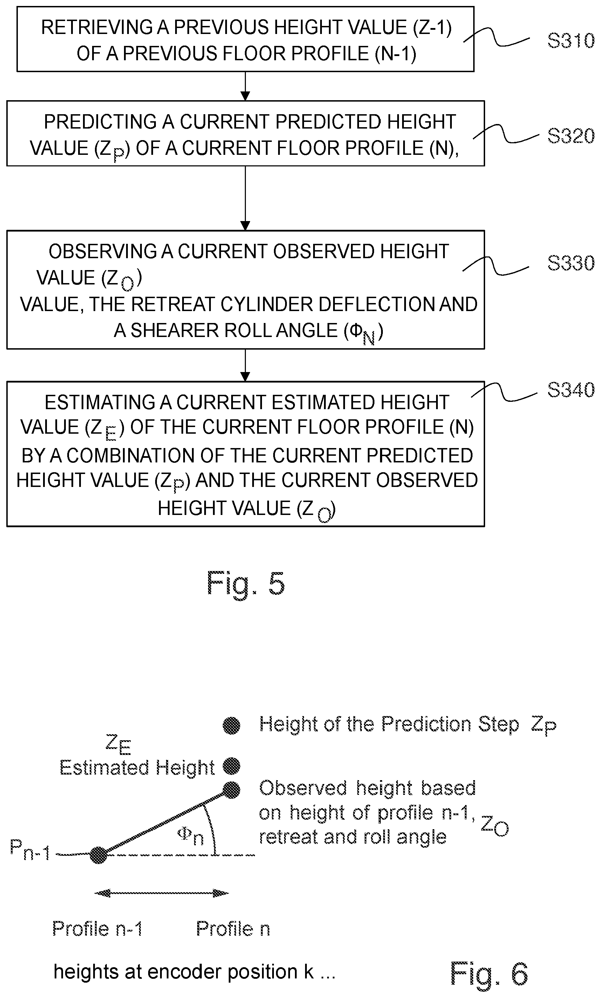

Figure 5 illustrates a further development of the first embodiment. Accordingly, the calculation step S30 may comprise, for a given encoder position k, the steps of retrieving S310, a previous height value z-1 of a previous floor profile n-1, predicting S320, a current predicted height value z_{P} of a current floor profile n, observing S330, a current observed height value z_{O} based on the retrieved height value, the retreat cylinder deflection *̅y̅*̅ᵢ, and a shearer roll angle Φ, and estimating S340 a current estimated height value z_{E} of the current floor profile n by a combination of the current predicted height value z_{P} and the current observed height value z_{O}.

The working principle of the development shown in Figure 5 is illustrated in Figure 6. The initial point Pₙ₋₁ may represent a shearer position calculated during a previous profile. This previous profile may be calculated by calculating one or more 3D positions and orientations of the longwall shearer 100 based on the absolute coordinate x, the shearer orientation ψ, Θ, Φ, and the relative shearer coordinate *̅y̅*̅ according to the present disclosure.

Based on a previous profile n-1, the proposed method may determine an estimated height for the current profile n. This estimated height may be determined for a given x-coordinate, or encoder position k. According to a preferred embodiment, the method may be repeated for more or all encoder positions k.

The current observed height value z_{O} may be based on the current shearer roll angle Φₙ as detected by the Inertial Navigation System. The estimation step S340 may for example comprise an optimization algorithm, comprising a regression algorithm and/or a Kalman Filter.

The shown algorithm is an exemplary implementation for a Kalman Filter design only. This should not limit the invention as any other estimation or regression algorithm might replace the Kalman Filter.

The information may be fed into a Kalman Filter and used to estimate the position and the orientation of the shearer. The estimation of roll and pitch angle is a state of the art process in navigation Kalman Filters. The INS data and the encoder data might be used to calculate a trajectory in the prediction step of the Kalman Filter.

In the observation step, the encoder data, the retreat data and the shearer orientation are applied on the last profile data to determine further information on the shearer position. The information of prediction and observation may then be combined to provide the final position estimate as well as a yaw angle estimate.

In more detail, the prediction step might be implemented as standard integration algorithm for position and yaw angle orientation. The observation step is executed at specific encoder positions. If the observation step is executed, the shearer position of the last profile at the specific encoder position is used as reference for the position calculation. The retreat data and the roll angle of the shearer determine the slope and the distance from reference position to the actual position to be calculated.

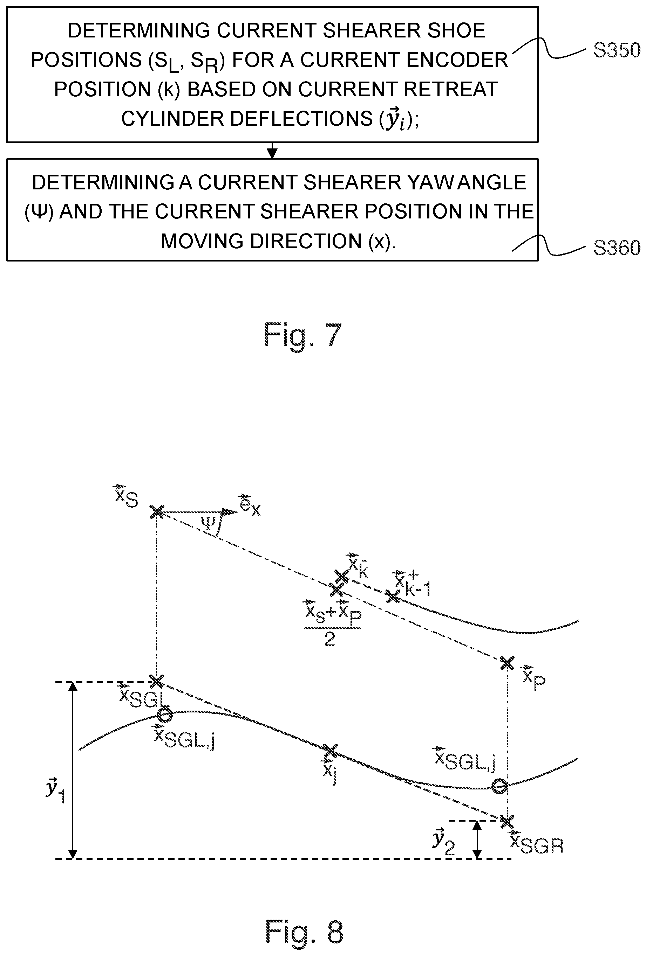

Figure 7 illustrates a further development of the first embodiment. Accordingly, the method may further comprise the steps of determining S350, a current shearer shoe position S_{L}, S_{R} for a current encoder position k based on current retreat cylinder deflections y̅ᵢ, and determining S360 a current shearer yaw angle ψ and the current shearer position in the moving direction x.

The shoe position may be a left shoe position S_{L} and/or a right shoe position S_{R}. Every time one pan 210 is displaced relative to another pan 210 in the face advance direction y, the shearer 100 is rotated about its yaw axis, thereby changing the yaw angle ψ. For each pan 210 of the panline 200, the relative pan displacement is known via the retreat cylinder deflection *̅y̅*̅ᵢ in face advance direction y. Knowing the shearer geometry and shearer shoe geometry, a conclusion about the 3D position and orientation of the longwall shearer may be obtained. By this, the yaw angle ψ drift may be reduced substantially.

Figure 8 illustrates the working principle of this development. Here, a shearer position xₖ may be calculated in an observation step. The corresponding observed shoe positions x_{SGL,j} and x_{SGR,j} are indicated by the two circles. The actual shoe positions x_{SGL} and x_{SGR} are different. Determining the current shoe positions x_{SGL} and x_{SGR} is possible via the current retreat cylinder deflections *̅y̅*̅₁ and *̅y̅*̅₂ Under consideration of the shearer geometry, in particular the shoe geometry, the current shearer yaw angle ψ and the current shearer position xₖ in the moving direction x may be determined.

In general, the calculation step S30 may comprise an optimization algorithm, comprising a regression algorithm and/or a Kalman Filter. In principle, relative coordinates y may be interpolated. In addition, the method may further comprise the step of generating S400 a shearer trajectory from at least two different outputs of the calculation step S30.

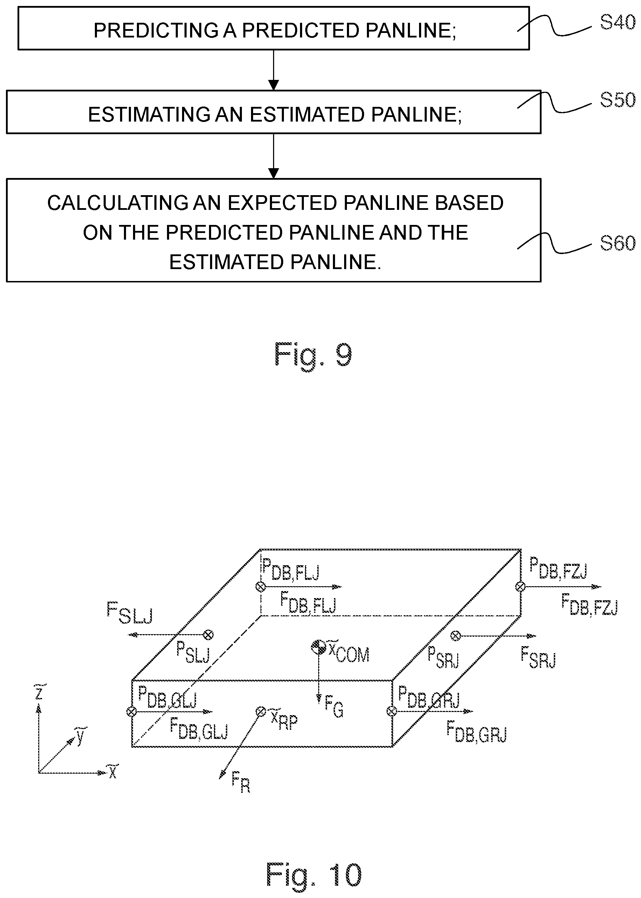

Figure 9 schematically illustrates a flow diagram of a second embodiment of the method according to the present disclosure. Accordingly, the method for determining a 3D position of a longwall shearer 100 traveling on a panline 200 along a longwall face 2 of an underground coal mining panel 4, the method comprising the steps of retrieving S10 sensor data indicative of an absolute shearer coordinate x and a shearer orientation ψ, Θ, Φ, retrieving S20 additional sensor data indicative of a relative shearer coordinate *̅y̅*̅, and calculating S30 the 3D position and orientation of the longwall shearer 100 based on the absolute coordinate x, the shearer orientation ψ, Θ, Φ, and the relative shearer coordinate *̅y̅*̅. Further, the method according to the second embodiment further comprises the steps of predicting S40 a predicted panline, estimating S50 an estimated panline, and calculating S60 an expected panline based on the predicted panline and the estimated panline.

The panline prediction S40 may further comprise the steps of retrieving S42 a current panline, retrieving S44 retreat cylinder deflections *̅y̅*̅ᵢ from the additional sensor data, and retrieving S46 a floor profile. Likewise, the panline estimation S50 may be established using the sensor data indicative of the absolute shearer coordinate x and the shearer orientation ψ, Θ, Φ. Further, floor profile 300 data for positioning the panline 200 on the extracted floor may be required.

Figure 10 shows forces acting on a pan body for the panline prediction step. In the panline prediction algorithm, each pan's position and orientation on the floor is predicted. The panline pose in the coal seam may be determined based on the last pan profile, the retreat information in face advance direction, the knowledge about the floor and the pan geometry. Pans may physically interact with each other. The pan's movements may therefore be restricted by dogbones, the floor and the displacement of the retreat cylinders in the roof supports (not shown in Figure 10). All these interactions may lead to physical equations which may be used to calculate the position and orientation of each pan and finally the complete panline. Some forces representing the interactions and restrictions may be gravity, relay bar forces, and collision forces on the side planes. The set of physical equations and torques might be resolved by an optimization algorithm line Newton's method, but also ordinary differential equation solvers might be applied as an alternative.

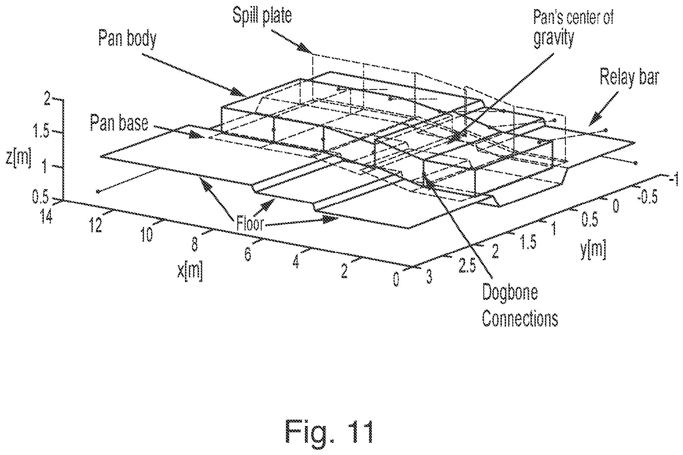

Figure 11 shows predicted pans predicted by the prediction step. Shown is a panline comprising several pans with pan bodies having a center of gravity and a pan base facing the longwall face to be mined (not shown in Figure 10). Accordingly, in the illustration shown in Figure 10, the longwall face would run along the x-axis for a y-axis value of about 2.5. The shearer (not shown in Figure 10) is configured to travel along the panline 200 which serves as a rail. The pan bodies may be connected via dogbone connections. Facing away from the longwall face to be mined, each pan may comprise a spill plate and a relay bar. The panline rests on the floor.

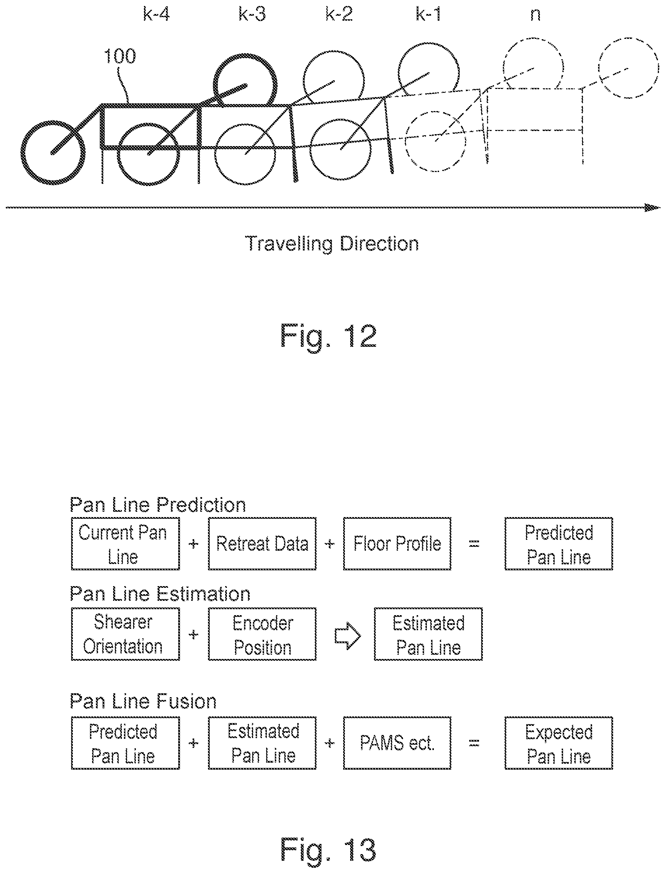

Figure 12 shows the underlying principle of the panline estimation step. The panline estimation comprises using the sensor data indicative of an absolute shearer coordinate and a shearer orientation. In the panline estimation, it is assumed that shoe positions of the shearer match up as the shearer travels on the panline, which may be understood as a rail. However, the information between shoe positions is missing. To overcome this missing information, pan geometry information may be included.

The illustration of Figure 12 represents a shearer 100 traveling on the panline 200 which is indicated by different encoder positions k-3, k-2, k-1, and k. From this information, it may be derived that the rear shoe of the shearer according to a later encoder position must have passed the position of a front shoe of the shearer according to an earlier encoder position. Therefore, retrieving an information of a front or rear shearer shoe passing the pan allows a conclusion on which pan, or in which pan intersection the shearer is currently positioned. To this end, it is required to know the shearer shoe geometry as a function of the encoder position.

Figure 13 shows a diagram of a method for determining a 3D position of a longwall shearer according to a further embodiment. Accordingly, the panline prediction step may cover the steps of retrieving a current pan line, retreat data, and a floor profile which results in a predicted panline. The panline estimation step may cover retrieving the shearer orientation and retrieving the encoder position which results in an estimated panline. Finally, in a panline fusion step, the predicted panline and the estimated panline as well as data taken from the pan measurement unit are retrieved which results in an expected panline.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

This is in particular the case with respect to the following optional features which may be combined with some or all embodiments, items and all features mentioned before in any technically feasible combination.

A method for determining a 3D position of a longwall sheerer traveling on a panline along a longwall face of an underground coal mining panel is provided, the method comprising the steps of retrieving sensor data indicative of an absolute shearer coordinate and a shearer orientation, retrieving additional sensor data indicative of a relative shearer coordinates, and calculating the 3D position and orientation of the longwall sheerer based on the absolute coordinate, the shearer orientation, in the relative shearer coordinate.

In the sense of the present disclosure, and absolute shearer coordinate may be a coordinate running from a fixed location within the coal mine. Likewise, the shearer orientation may be understood as an angular deviation of the shearer relative to a physical, absolute coordinate system. More precisely, the shearer orientation may comprise a yaw, pitch, and roll angle.

In the sense of the present disclosure, a relative shearer coordinates may be a 1D coordinate running from a fixed location of another component of a longwall sheerer, or another moving part which is not spatiality fixed tool the coal mine.

In the sense of the present disclosure, retrieving sensor data may be achieved using an analog sensor device in combination with a data acquisition unit, using a digital sensor device or digital data alone. In addition, the calculation step of the present disclosure may comprise an output, outputting the 3D position and orientation of the longwall shearer.

By retrieving additional sensor data indicative of a relative shearer coordinate, a further sensor information may be provided and used such that it is provided as an additional value for consideration in the calculation. As an example, by calculating the 3D position and orientation of the longwall sheerer based on the absolute coordinate, the shearer orientation and the relative shearer coordinate, the calculation results are more refined in comparison to using only absolute shearer coordinate and shearer orientation, since the latter are subject to data drift, causing issues in the steering controls and restrict further developments.

According to the invention, the absolute shearer coordinate comprises multiple encoder positions, wherein the additional sensor data indicate of a relative coordinate comprises a retreat cylinder deflection in a face advance direction. By that, position estimation is possible in face advance direction. Further, an additional value for the yaw angle of the longwall shearer may be provided, by which your angle drift using only inertia measurement unit data can be avoided.

In other words, the algorithm may be designed such as to stabilize the yaw angle which helps to improve an estimate of the shearer position in the seam.

According to a further development of this embodiment, the calculation step may comprise, for a given encoder position, the steps of retrieving a previous height value of the previous floor profile, predicting a current predicted height value of the current floor profile, observing a current observed height value based on the retrieved height value, the retreat cylinder deflection, and a current shearer roll angle, and estimating a current estimated height value of the current floor profile by a combination of the current predicted height value and the current observed height value.

By that, the algorithm is suitable for considering roll angle deviations which might occur if coal accumulates between the coal face the longwall sheerer.

According to a further development of this embodiment, the method may further comprise the steps of determining current shearer shoe positions for a current encoder position based on current retreat cylinder deflections, and determining a current shearer yaw angle and the current shearer position in the moving direction. By that and by knowing the shearer geometry and shearer shoe geometry, a conclusion about the 3D position and orientation of the longwall shearer may be obtained. By this, the yaw angle ψ drift may be reduced substantially.

According to a further development of this embodiment, the calculation step may comprise an optimization algorithm, comprising a regression algorithm and/or a Kalman Filter. By that, an initial value can be combined with an additional measured value by a stepwise optimization process. As an example, the common filter may comprise a prediction step followed by an observation step, wherein an initial value is predicted to yield a pre-estimate and subsequently, in the observation step a measurement update is added to achieve a post estimate, which may then be looped back to the prediction step.

According to a further development, the method may further comprise the step of interpolating relative coordinates. By that, additional relative coordinates may be obtained for positions where no physical measurement or retrieval of a relative coordinate is available.

According to a further development, the method may further comprise the step of generating a shearer trajectory from at least two different outputs of the calculation step. Thereby, a precise digital representation of the shearer trajectory may be achieved, which is crucial for analyzing the mining process, for comparing nominal an actual shearer positions and orientations, and for providing a digital twin of the longwall sheerer during operation in the coal mine.

According to a second embodiment of the present disclosure, the method may further comprise the steps of predicting a predicted panline, estimating an estimated panline, calculating an expected panline based on the predicted panline and the estimated panline.

By that, the 3D position of the longwall sheerer may be calculated based on panline geometry information in combination with sensor data taken from longwall sheerer and/or further components of the longwall sheerer system. This has the advantage, that a precise 3D position and orientation of the longwall sheerer during operation in the coal panel may be achieved, which is crucial for analyzing the mining process, for comparing nominal an actual shearer positions and orientations, and for providing a digital twin of the longwall sheerer during operation in the coal mine.

According to a further development of the second embodiment, the panline prediction step may comprise the steps of retrieving a current panline, retrieving retreat cylinder deflections from the additional sensor data, and retrieving a floor profile, wherein the panline prediction may further comprise the step of using physical equations suitable to calculate the position and orientation of each pan and/or the complete panline, wherein the physical equations may comprise gravity, relay bar forces, and/or pan collision forces.

By that the algorithm may be used to predict the pans' position and orientation on the floor. The panline pose in the seam may be determined based on the last pan profile, the retreat information in face advance direction, the knowledge about the floor and the pan geometry. Pans physically interact with each other. The movements may be restricted by dogbones, the floor and the displacement of the retreat cylinders in the roof supports. All these interactions may lead to physical equations which can be used to calculate the position and orientation of each pan and finally the complete panline.

According to a further development of the second embodiment, the panline estimation may be established using the sensor data indicative of an absolute shearer coordinate, a shearer orientation, and/or a shearer shoe position. By including such additional sensor data indicate of a relative shearer coordinate, a further sensor information may be provided and used such that it is provided as an additional value for consideration in the calculation.

According to a further development, the step of calculating an expected panline based on the predicted panline and the estimated panline may comprise the step of merging the panline estimation and the panline prediction into a final result using an optimization algorithm, preferably a Kalman Filter. In case other information sources are available, e. g. pan angles or roadway data to name only some common sources, this information might also be integrated into the Kalman filter.

Using a Kalman Filter allows an efficient recursive filter estimating the internal-state of a linear dynamic system from a series of noisy measurements.

A pan for a panline for use in a method according to the present disclosure is provided.

According to a development of the panline, the panline may further comprise one or more sensor device configured to measure gravity, relay bar forces, and/or pan collision forces. Thereby, the panline prediction may be established in the prediction step.

A longwall shearer is provided, comprising at least one pan according to the present disclosure, one or more hydraulic roof supports, the longwall shearer being configured for use in the method according to present disclosure, wherein the longwall shearer comprises a sensor device configured to retrieve sensor data indicative of an absolute shearer coordinate and a shearer orientation and configured to retrieve additional sensor data indicative of a relative shearer coordinate.

To this end, the sensor device may comprise or consist of one, two, or more dedicated sensor devices, comprising, but not limited to, an Inertial Navigation System, an encoder or odometer, and a hydraulic cylinder deflection measuring device.

### Industrial Applicability

With reference to the Figures, a method for determining a 3D position of a longwall shearer, a pan of a panline, and a long wall shearer system are applicable in any longwall shearer application.

In practice, a method for determining a 3D position of a longwall shearer, a pan of a panline, and a long wall shearer system may be implemented, manufactured, bought, or sold to retrofit a longwall mining shearer already deployed in the field in an aftermarket context, or alternatively may be implemented, manufactured, bought, sold or otherwise obtained in an OEM (original equipment manufacturer) context.

As alluded to previously herein, the aforementioned embodiments may increase the reliability and performance of a 3D shearer positioning as will be elaborated further herein momentarily.

## Claims

1. A computer-implemented method for determining a 3D position of a longwall shearer (100) traveling on a panline (200) along a longwall face (2) of an underground coal mining panel (4), the method comprising the steps of
- retrieving (S10) sensor data indicative of an absolute shearer coordinate (x) and a shearer orientation (ψ, Θ, Φ) using a sensor device (220);
- retrieving (S20) additional sensor data indicative of a relative shearer coordinate (*̅y̅*̅) using a sensor device (220); and
- calculating (S30) and rendering, using a computer, the 3D position and orientation of the longwall shearer (100) based on the absolute coordinate (x), the shearer orientation (ψ, Θ, Φ), and the relative shearer coordinate (*̅y̅*̅), wherein the calculation comprises outputting the 3D position and orientation of the longwall shearer with a panline,
**characterized in that**
the absolute shearer coordinate (x) comprises multiple encoder positions (k-1, k, k+1), and wherein the additional sensor data indicative of a relative coordinate (*̅y̅*̅) comprises a retreat cylinder deflection (y̅ᵢ) in a face advance direction (y).

2. The method according to claim 1, wherein the calculation step (S30) comprises, for a given encoder position (k), the steps of
- retrieving (S310) a previous height value (z-1) of a previous floor profile (n-1),
- predicting (S320) a current predicted height value (z_{P}) of a current floor profile (n),
- observing (S330) a current observed height value (z_{O}) based on the retrieved height value, the retreat cylinder deflection (*y̅ᵢ*) and a current shearer roll angle (Φₙ), and
- estimating (S340) a current estimated height value (z_{E}) of the current floor profile (n) by a combination of the current predicted height value (zP) and the current observed height value (zO).

3. The method according to any of the previous claims 1 or 2, further comprising the steps of
- determining (S350) current shearer shoe positions (S_{L}, S_{R}) for a current encoder position (k) based on current retreat cylinder deflections (*y̅ᵢ*); and
- determining (S360) a current shearer yaw angle (ψ) and the current shearer position in the moving direction (x).

4. The method according to any of the previous claims, wherein the calculation step (S30) comprises an optimization algorithm, comprising a regression algorithm and/or a Kalman Filter.

5. The method according to any of the previous claims, further comprising the step of interpolating (S360) relative coordinates (*̅y̅*̅).

6. The method according to any of the previous claims, further comprising the step of generating (S400) a shearer trajectory from at least two different outputs of the calculation step.

7. The method according to any of the previous claims, further comprising the steps of
- predicting (S40) a predicted panline;
- estimating (S50) an estimated panline;
- calculating (S60) an expected panline based on the predicted panline and the estimated panline.

8. The method according to claim 7, wherein the panline prediction () comprises the steps of
- retrieving (S42) a current panline,
- retrieving (S44) retreat cylinder deflections (*y̅ᵢ*) from the additional sensor data, and
- retrieving (S46) a floor profile (300), wherein the panline prediction further comprises the step of
- using physical equations suitable to calculate the position and orientation of each pan and/or the complete panline, wherein the physical equations comprise gravity, relay bar forces, and/or pan collision forces.

9. The method according to claim 8, wherein the physical equations may be resolved by an optimization algorithm, preferably comprising a Newton method.

10. The method according to claims 7-9, wherein the panline estimation is established using the sensor data indicative of an absolute shearer coordinate, a shearer orientation, and/or a shearer shoe position.

11. The method according to claims 7-10, wherein the step of calculating (S60) an expected panline based on the predicted panline and the estimated panline comprises the step of merging the panline estimation and the panline prediction into a final result using an optimization algorithm, preferably a Kalman Filter.

12. Longwall shearer system (1) comprising a longwall shearer (100), at least one pan , one or more hydraulic roof supports (8), the longwall shearer (100) being configured for use in the method according to claims 1-11, wherein the longwall shearer comprises a sensor device configured to retrieve sensor data indicative of an absolute shearer coordinate (x) and a shearer orientation (ψ, Θ, Φ) and configured to retrieve (S20) additional sensor data indicative of a relative shearer coordinate (*̅y̅*̅).

## Patentansprüche

1. Computerimplementiertes Verfahren zum Bestimmen einer 3D-Position eines Walzenschrämladers (100), der auf einem Streckenförderer (200) entlang einer Strebfront (2) eines unterirdischen Kohleabbaufelds (4) fährt, wobei das Verfahren die Schritte umfasst
- Abrufen (S10) von Sensordaten, die eine absolute Schrämmaschinenkoordinate (x) und eine Schrämmaschinenausrichtung (Ψ, Θ, Φ) angeben, unter Verwendung einer Sensorvorrichtung (220);
- Abrufen (S20) zusätzlicher Sensordaten, die eine relative Schrämmaschinenkoordinate (*̅y̅*̅) angeben, unter Verwendung einer Sensorvorrichtung (220) und
- Berechnen (S30) und Darstellen, unter Verwendung eines Computers, der 3D-Position und Ausrichtung des Walzenschrämladers (100) basierend auf der absoluten Koordinate (x), der Schrämmaschinenausrichtung (Ψ, Θ, Φ) und der relativen Schrämmaschinenkoordinate (*̅y̅*̅) , wobei die Berechnung das Ausgeben der 3D-Position und Ausrichtung des Walzenschrämladers mit einem Streckenförderer umfasst,
**dadurch gekennzeichnet, dass**
die absolute Schrämmaschinenkoordinate (x) mehrere Encoderpositionen (k-1, k, k+1) umfasst, und wobei die zusätzlichen Sensordaten, die eine relative Koordinate (*̅y̅*̅) angeben, eine Rückzugszylinderauslenkung (*y̅ᵢ*) in einer Strebvortriebsrichtung (y) umfassen.

2. Verfahren nach Anspruch 1, wobei der Berechnungsschritt (S30) für eine gegebene Encoderposition (k) die Schritte umfasst
- Abrufen (S310) eines vorherigen Höhenwerts (z-1) eines vorherigen Sohlenprofils (n-1),
- Vorhersagen (S320) eines aktuellen vorhergesagten Höhenwerts (z_{P}) eines aktuellen Sohlenprofils (n),
- Beobachten (S330) eines aktuellen beobachteten Höhenwerts (zo) basierend auf dem abgerufenen Höhenwert, der Rückzugszylinderauslenkung (*y̅ᵢ*) und einem aktuellen Schrämwalzenwinkel (Φₙ) und
- Schätzen (S340) eines aktuellen geschätzten Höhenwerts (z_{E}) des aktuellen Sohlenprofils (n) durch eine Kombination des aktuellen vorhergesagten Höhenwerts (zP) und des aktuellen beobachteten Höhenwerts (zO).

3. Verfahren nach einem der vorstehenden Ansprüche 1 oder 2, ferner umfassend die Schritte
- Bestimmen (S350) aktueller Schrämschuhpositionen (S_{L}, S_{R}) für eine aktuelle Encoderposition (k) basierend auf aktuellen Rückzugszylinderauslenkungen (*y̅ᵢ*) und
- Bestimmen (S360) eines aktuellen Schrämmaschinengierwinkels (Ψ) und der aktuellen Schrämmaschinenposition in der Bewegungsrichtung (x).

4. Verfahren nach einem der vorstehenden Ansprüche, wobei der Berechnungsschritt (S30) einen Optimierungsalgorithmus umfasst, der einen Regressionsalgorithmus und/oder ein Kalman-Filter umfasst.

5. Verfahren nach einem der vorstehenden Ansprüche, ferner umfassend den Schritt des Interpolierens (S360) relativer Koordinaten (*̅y̅*̅)

6. Verfahren nach einem der vorstehenden Ansprüche, ferner umfassend den Schritt des Erzeugens (S400) einer Schrämwalzentrajektorie aus mindestens zwei verschiedenen Ausgaben des Berechnungsschritts.

7. Verfahren nach einem der vorstehenden Ansprüche, ferner umfassend die Schritte
- Vorhersagen (S40) eines vorhergesagten Streckenförderers;
- Schätzen (S50) eines geschätzten Streckenförderers;
- Berechnen (S60) eines erwarteten Streckenförderers basierend auf dem vorhergesagten Streckenförderer und dem geschätzten Streckenförderer.

8. Verfahren nach Anspruch 7, wobei die Streckenförderervorhersage () die Schritte umfasst
- Abrufen (S42) eines aktuellen Streckenförderers,
- Abrufen (S44) von Rückzugszylinderauslenkungen (*̅y̅*̅ᵢ) aus den zusätzlichen Sensordaten und
- Abrufen (S46) eines Sohlenprofils (300), wobei die Streckenförderervorhersage ferner den Schritt umfasst
- Verwenden physikalischer Gleichungen, die zum Berechnen der Position und Ausrichtung jeder Förderpfanne und/oder des vollständigen Streckenförderers geeignet sind, wobei die physikalischen Gleichungen Schwerkraft, Abrückstangenkräfte und/oder Förderpfannenkollisionskräfte umfassen.

9. Verfahren nach Anspruch 8, wobei die physikalischen Gleichungen durch einen Optimierungsalgorithmus gelöst werden können, vorzugsweise umfassend ein Newton-Verfahren.

10. Verfahren nach den Ansprüchen 7 bis 9, wobei die Streckenfördererschätzung unter Verwendung der Sensordaten erstellt wird, die eine absolute Schrämmaschinenkoordinate, eine Schrämmaschinenausrichtung und/oder eine Schrämmaschinenschuhposition angeben.

11. Verfahren nach den Ansprüchen 7 bis 10, wobei der Schritt des Berechnens (S60) eines erwarteten Streckenförderers basierend auf dem vorhergesagten Streckenförderer und dem geschätzten Streckenförderer den Schritt des Zusammenführens der Streckenfördererschätzung und der Streckenförderervorhersage in ein Endergebnis unter Verwendung eines Optimierungsalgorithmus, vorzugsweise eines Kalman-Filters, umfasst.

12. Walzenschrämladersystem (1), umfassend einen Walzenschrämlader (100), mindestens eine Förderpfanne, eine oder mehrere hydraulische Deckenstützen (8), wobei der Walzenschrämlader (100) zur Verwendung in dem Verfahren nach den Ansprüchen 1 bis 11 konfiguriert ist, wobei der Walzenschrämlader eine Sensorvorrichtung umfasst, die konfiguriert ist, um Sensordaten abzurufen, die eine absolute Schrämmaschinenkoordinate (x) und eine Schrämmaschinenausrichtung (Ψ, Θ ,Φ) angeben, und konfiguriert ist, um (S20) zusätzliche Sensordaten abzurufen, die eine relative Schrämmaschinenkoordinate (*̅y̅*̅) angeben.

## Revendications

1. Procédé mis en œuvre par ordinateur permettant de déterminer une position 3D d'une haveuse de longue taille (100) se déplaçant sur une ligne de panoramique (200) le long d'une face de longue taille (2) d'un panneau d'extraction de charbon souterrain (4), le procédé comprenant les étapes consistant à
- récupérer (S10) des données de capteur indiquant une coordonnée de haveuse absolue (x) et une orientation de haveuse (Ψ, Θ, Φ) à l'aide d'un dispositif de capteur (220) ;
- récupérer (S20) des données de capteur supplémentaires indiquant une coordonnée relative de haveuse (*̅y̅*̅) à l'aide d'un dispositif de capteur (220) ; et
- calculer (S30) et rendre, à l'aide d'un ordinateur, la position et l'orientation 3D de la haveuse de longue taille (100) sur la base de la coordonnée absolue (x), de l'orientation de haveuse (Ψ, Θ, Φ), et de la coordonnée relative de haveuse (*̅y̅*̅) , dans lequel le calcul comprend la sortie de la position et de l'orientation 3D de la haveuse de longue taille avec une ligne panoramique,
**caractérisée en ce que**
la coordonnée de haveuse absolue (x) comprend plusieurs positions de codeur (k-1, k, k+1), et dans lequel les données de capteur supplémentaires indiquant une coordonnée relative (*̅y̅*̅) comprennent une déviation de cylindre de retraire (*̅y̅*̅ᵢ) dans une direction d'avance de face (y).

2. Procédé selon la revendication 1, dans lequel l'étape de calcul (S30) comprend, pour une position de codeur (k) donnée, les étapes consistant à
- récupérer (S310) une valeur de hauteur précédente (z-1) d'un profil de sol précédent (n-1),
- prédire (S320) une valeur de hauteur prédite actuelle (z_{P}) d'un profil de sol actuel (n),
- observer (S330) une valeur de hauteur observée actuelle (zo) sur la base de la valeur de hauteur récupérée, de la déviation de cylindre de retraite (*̅y̅*̅ᵢ) et d'un angle de roulis actuel de haveuse (Φn), et
- estimer (S340) une valeur de hauteur estimée actuelle (z_{E}) du profil de sol actuel (n) par une combinaison de la valeur de hauteur prédite actuelle (zP) et de la valeur de hauteur actuelle desservie (zO).

3. Procédé selon l'une quelconque des revendications précédentes 1 à 2, comprenant en outre les étapes consistant à
- déterminer (S350) des positions actuelles de sabot de haveuse (S_{L}, S_{R}) pour une position de codeur de courant (k) sur la base des déviations actuelles de cylindre de retraite (*̅y̅*̅ᵢ) et
- déterminer (S360) un angle de lacet de haveuse actuel (Ψ) et la position de haveuse actuelle dans la direction de déplacement (x).

4. Procédé selon l'une quelconque des revendications précédentes, dans lequel l'étape de calcul (S30) comprend un algorithme d'optimisation, comprenant un algorithme de régression et/ou un filtre de Kalman.

5. Procédé selon l'une quelconque des revendications précédentes, comprenant en outre l'étape consistant à interpoler (S360) des coordonnées relatives (*̅y̅*̅) .

6. Procédé selon l'une quelconque des revendications précédentes, comprenant en outre l'étape consistant à générer (S400) une trajectoire de haveuse à partir d'au moins deux sorties différentes de l'étape de calcul.

7. Procédé selon l'une quelconque des revendications précédentes, comprenant en outre les étapes consistant à
- prédire (S40) une ligne panoramique prédite ;
- estimer (S50) une ligne panoramique estimée ;
- calculer (S60) une ligne panoramique attendue sur la base de la ligne panoramique prédite et de la ligne panoramique estimée.

8. Procédé selon la revendication 7, dans lequel la prédiction de ligne panoramique () comprend les étapes consistant à
- récupérer (S42) une ligne panoramique actuelle,
- récupérer (S44) les déviations de cylindre de retraite (*y̅ᵢ*) à partir des données de capteur supplémentaires, et
- récupérer (S46) un profil de sol (300), dans lequel la prédiction de ligne panoramique comprend en outre l'étape consistant à
- utiliser des équations physiques permettant de calculer la position et l'orientation de chaque plateau et/ou de la ligne panoramique complète, dans lequel les équations physiques comprennent la gravité, les forces de barre de relais et/ou les forces de collision de plateau.

9. Procédé selon la revendication 8, dans lequel les équations physiques peuvent être résolues par un algorithme d'optimisation, comprenant de préférence un procédé de Newton.

10. Procédé selon les revendications 7 à 9, dans lequel l'estimation de la ligne panoramique est établie à l'aide des données de capteur indiquant une coordonnée absolue de haveuse, une orientation de haveuse, et/ou une position de sabot de haveuse.

11. Procédé selon les revendications 7 à 10, dans lequel l'étape consistant à calculer (S60) une ligne de panoramique attendue sur la base de la ligne de panoramique prédite et de la ligne de panoramique estimée comprend l'étape consistant à fusionner l'estimation de ligne de panoramique et de la prédiction de ligne de panoramique en un résultat final à l'aide d'un algorithme d'optimisation, de préférence un filtre de Kalman.

12. Système de haveuse de longue taille (1) comprenant une haveuse de longue taille (100), au moins un plateau, un ou plusieurs supports hydrauliques de toit (8), la haveuse de longue taille (100) étant conçue pour être utilisée dans le procédé selon les revendications 1 à 11, dans lequel la haveuse de longue taille comprend un dispositif de capteur configuré pour récupérer des données de capteur indiquant une coordonnée absolue de haveuse (x) et une orientation de haveuse (Ψ, Θ, Φ) et configuré pour récupérer (S20) des données de capteur supplémentaires indiquant une coordonnée relative du haveur (*̅y̅*̅)
